# EUROPEAN PATENT APPLICATION

(11) **EP 2 608 522 A1**
(43) Date of publication of application: **26.06.2013**
(21) Application number: 13160736.8
(22) Date of filing: 31.01.2012
(51) Int. Cl.: H04N 5/225, H04N 5/64, G06F 1/16

(54) **Television**

(30) Priority: 10.06.2011 JP 2011130209
(62) Divisional of application: 12153324.4
(71) Applicant: Kabushiki Kaisha Toshiba, Minato-ku Tokyo 105-8001 (JP)
(72) Inventor: Yamagishi, Atsuhiro, Tokyo, 105-8001 (JP)
(74) Representative: Henkel, Breuer & Partner

(57) **Abstract**

A television comprising a housing (4) comprising a front wall (6) having an inner surface and an outer surface, and an end portion (11), the front wall (6) extending approximately vertically and comprising a first opening (6a) and a second opening (61), the end portion (11) forming a part of the front wall (6) A display device (8) is provided in the housing (4), the display device comprising a display screen (8a) exposed through the first opening (6a). A camera (35) is provided in the end portion (11) of the housing (4), wherein a photographing direction of the camera (35) is tilted with respect to the display screen (8a), and at least a part of the camera (35) is inserted in the second opening (61) such that the camera (35) comprises a portion located closer to the outside of the housing (4) than the inner surface of the front wall (6).

## Description

Embodiments described herein relate generally to a television comprising a camera.

A mobile apparatus having a camera is known.

A general architecture that implements the various features of the embodiments will now be described with reference to the drawings. The drawings and the associated descriptions are provided to illustrate the embodiments and not to limit the scope of the invention.
FIG. 1 is an exemplary front view of a television according to an embodiment;
FIG. 2 is an exemplary rear view of a camera module shown in FIG. 1;
FIG. 3 is an exemplary cross-sectional view taken along the line F3-F3, of a housing and the camera module shown in FIG. 2;
FIG. 4 is an exemplary cross-sectional view taken along the line F4-F4, of the housing and the camera module shown in FIG. 2;
FIG. 5 is an exemplary cross-sectional view taken along the line F5-F5, of the housing and the camera module shown in FIG. 2;
FIG. 6 is an exemplary cross-sectional view taken along the line F6-F6, of the housing and the camera module shown in FIG. 2; and
FIG. 7 is an exemplary cross-sectional view of a camera module related to the embodiment.

Various embodiments will be described hereinafter with reference to the accompanying drawings.

In general, according to one embodiment, a television comprises a housing, a display device in the housing, and a camera. The camera is at a position shifted in a longitudinal direction of an end portion of the housing in relation to the center of the end portion.

Hereinafter, embodiments will be described with reference to the drawings.

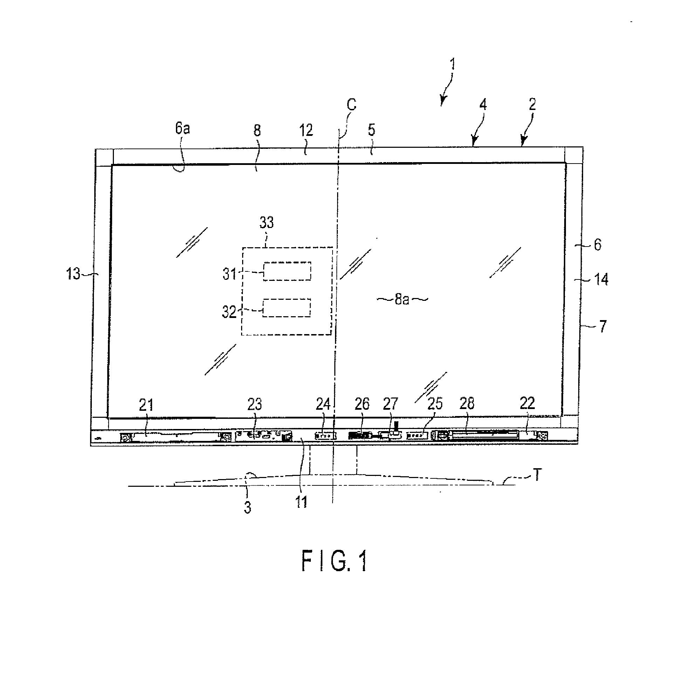

FIGS. 1, 2, 3, 4, 5, and 6 illustrate a television 1 according to an embodiment. The television 1 is an example of an electronic apparatus which is used in a stand state. As shown in FIG. 1, the television 1 is a stand type television used by being placed on a television table T, for example, and includes a display unit 2 and a stand 3. The television 1 may be a wall-mounted type television attached to a wall, for example, and may be other types of television.

The display unit 2 includes a housing 4. The housing 4 is formed in a flat shape and is supported by the stand 3 in a state of standing approximately vertically. The housing 4 includes a front bezel 5 and a back cover (not shown). The front bezel 5 forms a front wall 6 of the housing 4 and a part of a peripheral wall 7, for example. The front wall 6 stands approximately vertically and faces users.

A display device 8 is accommodated in the housing 4. The display device 8 is a liquid crystal panel, for example, and is not limited to this. The display device 8 includes a display screen 8a. The display screen 8a is exposed to the outside through an opening 6a of the front wall 6 of the housing 4.

As shown in FIG. 1, the housing 4 has first to fourth end portions 11, 12, 13, and 14. The first end portion 11 is a lower end portion of the housing 4 and is positioned close to the stand 3. The first end portion 11 extends approximately in a horizontal direction. The second end portion 12 is an upper end portion of the housing 4 and is positioned on a side opposite to the first end portion 11 so as to extend approximately in parallel to the first end portion 11. The third and fourth end portions 13 and 14 are the left and right end portions of the housing and extend approximately in the vertical direction so as to connect the first end portion 11 and the second end portion 12 together.

As shown in FIG. 1, a plurality of modules and circuit boards are mounted to be confined in the first end portion 11. In this way, the frames of the second to fourth end portions 12, 13, and 14 can be made thinner and finer than the frame of the first end portion 11. This contributes to size reduction and improvement in the design properties of the television 1.

As shown in FIG. 1, first and second speakers 21 and 22, an LED/remote control circuit board 23, first and second 3D infrared circuit boards 24 and 25, a camera module 26, a human sensor 27, and a touch sensor 28 are provided in the first end portion 11.

The first and second speakers 21 and 22 and the human sensor 27 are examples of a "module". The LED/remote control circuit board 23 and the first and second 3D infrared circuit boards 24 and 25 are examples of a "circuit board". In FIG. 1, for the sake of convenience, a part of the housing 4 is cut away so as to expose the modules and circuit boards.

The first and second speakers 21 and 22 are separately located in both the left and right ends of the first end portion 11, respectively. The first and second speakers 21 and 22 are mounted so as to face downward, for example.

The LED/remote control circuit board 23 receives a remote control manipulation signal. The LED/remote control circuit board 23 is disposed between the first speaker 21 and the central line C of the housing 4. Moreover, the central line C is a line that vertically crosses the center in the horizontal direction of the housing 4. The LED/remote control circuit board 23 is disposed within a predetermined range of regions from the central line C, for example. When the LED/remote control circuit board 23 is positioned close to the center of the housing 4, the LED/remote control circuit board 23 can easily receive signals from a remote control which is often manipulated while facing the housing 4.

The television 1 according to the present embodiment is a 3D television which can display stereoscopic images. The 3D infrared circuit boards 24 and 25 (commonly called 3D IR circuit boards) transmit a control signal to active shutter glasses worn by a user to realize 3-dimensional display.

Specifically, right-eye images and left-eye images, for example, are switched at high speed and displayed on the display screen 8a of the display device 8. The 3D infrared circuit boards 24 and 25 transmit signals that alternatively block the left and right-eye portions of the glasses toward the active shutter glasses worn by the user in synchronization with the switching of images on the display screen 8a. In this way, latent images remain on both eyes of the user, whereby 3-dimensional display is realized.

If the first and second 3D infrared circuit boards 24 and 25 are disposed close to each other, a viewing angle decreases. Thus, the active shutter glasses may not react at a position shifted from the front surface of the television, for example. Therefore, the two 3D infrared circuit boards 24 and 25 are disposed so as to be separated by a predetermined distance, for example.

The first 3D infrared circuit board 24 is disposed at the central portion of the first end portion 11. In the present embodiment, a part of the first 3D infrared circuit board 24 overlaps the central line C, for example. The first 3D infrared circuit board 24 is positioned closer to the center of the first end portion 11 than a camera 35 is. The second 3D infrared circuit board 25 is disposed on the opposite side of the first 3D infrared circuit board 24 with the central line C disposed therebetween. The 3D infrared circuit boards 24 and 25 may not necessarily be provided plurally, but may be provided singly, for example. However, when a plurality of 3D infrared circuit boards 24 and 25 is provided, the viewing angle of 3-dimensional display can be widened.

The human sensor 27 is provided between the camera module 26 and the second 3D infrared circuit board 25. The human sensor 27 is connected to the camera module 26 by a cable or a flexible print board, for example. The touch sensor 28 is provided at a position overlapping the second speaker 22.

The camera module 26 photographs the face of a user in order to authenticate the user with face recognition. The television 1 includes an user authentication module 31 and a control module 32. The user authentication module 31 performs user authentication via face recognition in response to the signal of an image photographed by the camera module 26. The control module 32 shows, to a user authenticated via face recognition, a favorite display quality mode of the user or recorded contents reserved by the user. The user authentication module 31 and the control module 32 are realized by a circuit board 33 accommodated in the housing 4, for example. The circuit board 33 is an example of a "controller".

The camera module 26 collects the images of users facing the display screen 8a. The camera module 26 may be one which collects images for video call (i.e., television phone) of Skype (trademark), for example, and may be one used for other purposes.

As shown in FIG. 1, the camera module 26 is provided at a position shifted in the longitudinal direction of the first end portion 11 in relation to the center of the first end portion 11. That is, in the present embodiment, the camera module 26 is provided at a position shifted substantially in the horizontal direction in relation to the center of the first end portion 11. Specifically, the camera module 26 is provided between the first 3D infrared circuit board 24 and the second 3D infrared circuit board 25, and more specifically, is provided between the first 3D infrared circuit board 24 and the human sensor 27.

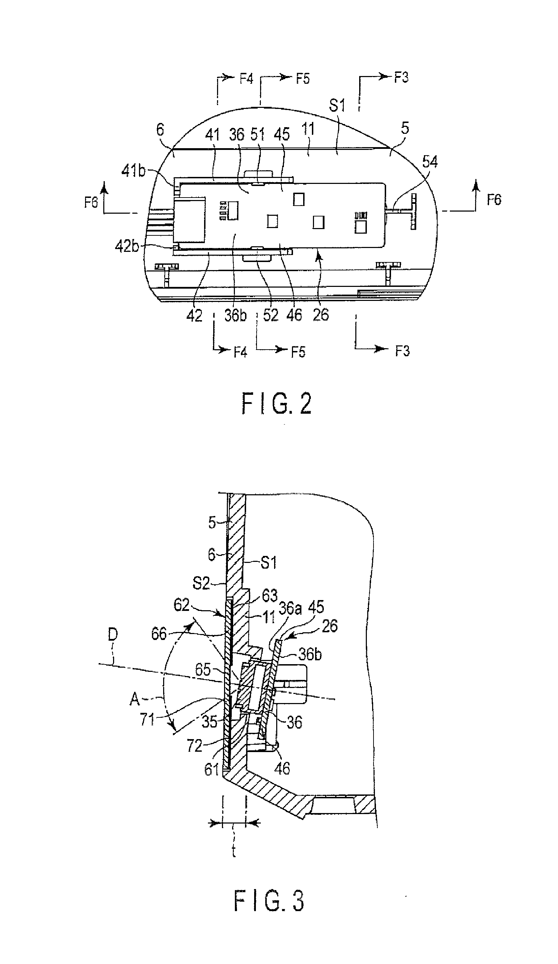

As shown in FIG. 3, the camera module 26 includes the camera 35 and a circuit board 36 (i.e., camera circuit board) on which the camera 35 is mounted. The camera module 26 is attached to the front wall 6 so that the camera 35 and the circuit board 36 are in a tilted state. The camera 35 and the circuit board 36 are mounted so that the photographing direction D of the camera 35 is tilted toward the center of the housing 4. That is, in the present embodiment, the camera 35 is mounted with the photographing direction D tilted upward.

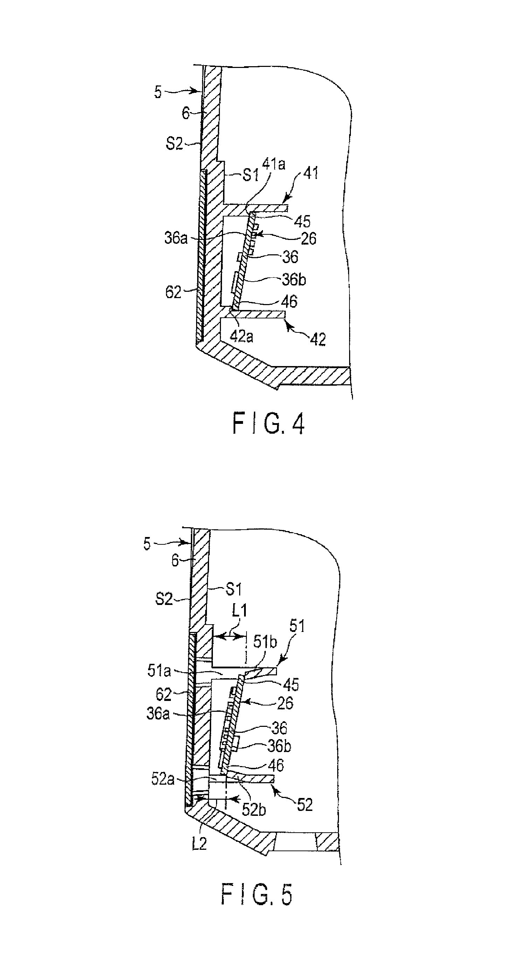

A specific mounting structure will be described. As shown in FIG. 4, the front wall 6 of the housing 4 includes first and second ribs 41 and 42. The first and second ribs 41 and 42 are examples of a "supporting portion". The first and second ribs 41 and 42 protrude from the inner surface S1 of the housing 4 toward the end portions of the circuit board 36.

The circuit board 36 includes first and second surfaces 36a and 36b. The first surface 36a is a front surface, for example, on which the camera 35 is attached. The second surface 36b is a rear surface (i.e., back surface), for example, which is positioned on the opposite side of the first surface 36a. Moreover, the circuit board 36 includes first and second end portions 45 and 46. The first end portion 45 is an upper end portion, for example. The second end portion 46 is a lower end portion, for example, which is positioned on the opposite side of the first end portion 45.

The first rib 41 is provided so as to correspond to the first end portion 45 of the circuit board 36 and support the first end portion 45 of the circuit board 36. The first rib 41 includes a first step portion 41a that receives the first surface 36a of the circuit board 36. The second rib 42 is provided so as to correspond to the second end portion 46 of the circuit board 36 and support the second end portion 46 of the circuit board 36. The second rib 42 includes a second step portion 42a that receives the first surface 36a of the circuit board 36.

As shown in FIG. 4, the second step portion 42a is positioned closer to the inner surface S1 of the housing 4 than the first step portion 41a is. Thus, the second end portion 46 of the circuit board 36 supported by the second step portion 42a is positioned closer to the front side than the first end portion 45 of the circuit board 36 supported by the first step portion 41a. Thus, the camera 35 and the circuit board 36 are supported in a tilted posture.

As shown in FIG. 5, the front wall 6 of the housing 4 includes first and second hooks 51 and 52. The first hook 51 is an example of a "first engaging portion". The first hook 51 protrudes from the inner surface S1 of the housing 4 toward the first end portion 45 of the circuit board 36 and is configured to support the first end portion 45. The second hook 52 is an example of a "second engaging portion". The second hook 52 protrudes from the inner surface S1 of the housing 4 toward the second end portion 46 of the circuit board 36 and is configured to support the second end portion 46.

The first hook 51 includes a proximal end portion 51a connected to the inner surface S1 of the housing 4 and a first contact portion 51b configured to contact with the second surface 36b of the first end portion 45 of the circuit board 36 from a side opposite to the inner surface S1 of the housing 4. That is, the first end portion 45 of the circuit board 36 is interposed between the first contact portion 51b and the first step portion 41a, whereby the position of the first end portion 45 is fixed.

Similarly, the second hook 52 includes a proximal end portion 52a connected to the inner surface S1 of the housing 4 and a second contact portion 52b configured to contact with the second surface 36b of the second end portion 46 of the circuit board 36 from a side opposite to the inner surface S1 of the housing 4. That is, the second end portion 46 of the circuit board 36 is interposed between the second contact portion 52b and the second step portion 41b, whereby the position of the second end portion 46 is fixed.

The first and second hooks 51 and 52 are formed of a plastic material to be integral with the front bezel 5 and are configured to be elastically deformed. The circuit board 36 is attached by being pressed toward the inside of the first and second contact portions 51b and 52b from the outside of the first and second hooks 51 and 52.

That is, in response to pressing of the circuit board 36, the first and second hooks 51 and 52 are elastically deformed toward the outer side (e.g., the upper and lower sides in FIG. 5), and a space through which the circuit board 36 passes is formed between the first contact portion 51b and the second contact portion 52b. When the circuit board 36 passes through between the first contact portion 51b and the second contact portion 52b, the first and second hooks 51 and 52 elastically restore to the original positions. In this way, the first and second contact portions 51b and 52b contact with the second surface 36b of the circuit board 36.

Here, as shown in FIG. 5, the distance L1 between the first contact portion 51b and the inner surface S1 of the housing 4 is larger than the distance L2 between the second contact portion 52b and the inner surface S1 of the housing 4. Thus, the first hook 51 is elastically deformed more easily than the second hook 52. In other words, the first contact portion 51b is more likely to move toward the outer side (namely, a side to increasing the distance between the two hooks 51 and 52) than the second contact portion 52b.

As shown in FIG. 2, the first and second ribs 41 and 42 include bent portions 41b and 42b, respectively. The bent portions 41b and 42b are configured to contact with an end portion in the longitudinal direction of the camera module 26 and support the camera module 26 from a lateral side. As shown in FIG. 2, the housing 4 includes a third rib 54 that is configured to contact with the other end portion in the longitudinal direction of the camera module 26 and support the camera module 26 from a side opposite to the bent portions 41b and 42b. The camera module 26 is surrounded by the first to third ribs 41, 42, and 54, whereby the position in the lateral direction thereof is determined.

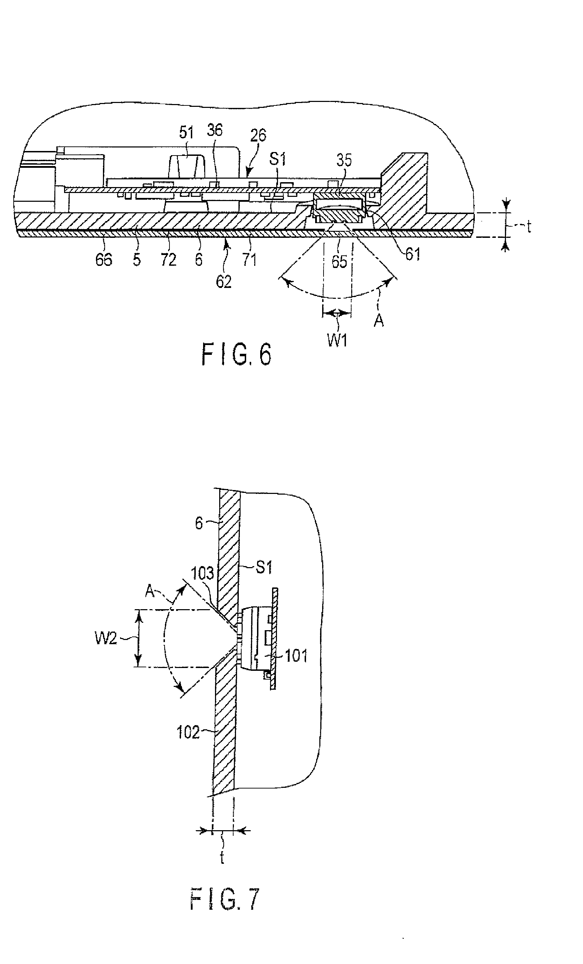

As shown in FIGS. 3 and 6, the front wall 6 of the housing 4 includes an opening 61 at a position corresponding to the camera 35. At least a part (namely, the distal end portion) of the camera 35 is inserted into the opening 61 and positioned closer to the outside (e.g., the front side) than the inner surface S1 of the front wall 6. That is, at least a part of the camera 35 enters into the middle of the thickness t of the front wall 6.

As shown in FIG. 3, the front wall 6 of the housing 4 includes an attachment portion 63 to which a sheet 62 is attached. The attachment portion 63 is depressed so as to correspond to the thickness of the sheet 62, for example, in relation to a front-side surface S2 of the front wall 6. The thickness t of the front wall 6 is 2 to 3 mm, for example. The sheet 62 is thinner than the thickness t (namely, the thickness of the housing 4) of the front wall 6. The thickness of the sheet 62 is 1 mm, for example.

The sheet 62 is attached to the attachment portion 63 so as to cover the opening 61. In this way, the camera 35 is not directly exposed to the outside by being covered by the sheet 62. The sheet 62 includes a light transmitting portion 65 (i.e., light receiving portion) and a light blocking portion 66. The light transmitting portion 65 is a window portion having light transmitting properties, provided at a position corresponding to the camera 35. The camera 35 can photograph the outside through the light transmitting portion 65. The light blocking portion 66 is provided in a position which does not corresponding to the camera 35, (i.e., a position which is away from the camera 35) and has light blocking properties. The light blocking portion 66 conceals the portion covered by the sheet 62 from the outside.

The sheet 62 includes a main portion 71 (i.e., body portion) formed of a transparent material (for example, a plastic material), for example, and a light blocking print 72 (print layer) provided on the main portion 71. The print 72 is provided outside a portion of the sheet 62 corresponding to the camera 35. The print 72 is provided on the rear surface of the sheet 62, for example. The portion where the print 72 is provided serves as the light blocking portion 66, and the portion where the print 72 is not provided serves as the light transmitting portion 65. The print 72 may be provided on the front-side surface of the sheet 62. The print 72 is a black or silver print, for example, but is not limited to this.

According to such a configuration, the degree of freedom in the layout of a circuit board can be improved.

For example, some mobile phones have a camera module at a position shifted from the center of a case. However, mobile phones are generally held by the user's hand when photographing, and users can freely move the camera at any positions and freely tilt the camera in any directions. Thus, in mobile electronic apparatuses like mobile phones, the position of the camera is not important and has little effect on performance or usability regardless of where the camera is disposed.

In contrast, in a fixed type electronic apparatus like the television 1, it is difficult to freely move the position of a camera when photographing, and the position of the camera is fixed. Thus, considering the fact that in many cases, users sit in front of a television, it may be thought that the camera has to be provided at the center of the lower end portion of a housing.

Thus, for comparison, a structure in which the camera module 26 is disposed at the center of the first end portion 11 of the housing 4 will be considered. In this case, since the camera module 26 is positioned at the center of the first end portion 11, it is difficult to effectively utilize the remaining space, and the degree of freedom in the layout of other circuit boards or modules is limited. Thus, it is difficult to mount a large number of circuit boards and modules, and it may be difficult to dispose the mounted circuit boards and modules at the optimal mounting positions from the perspective of a viewing angle or the like. Therefore, it is difficult to improve the performance of the television 1.

In contrast, according to the configuration of the present embodiment, the camera 35 is provided at a position shifted in the longitudinal direction of the end portion 11 in relation to the center of the end portion 11 of the housing 4. That is, the television 1 of the present embodiment can effectively utilize the inner space of the housing 4 by intentionally shifting the position of the camera 35 from the center of the end portion 11 of the housing 4. In this way, it is possible to mount a large number of circuit boards and modules such as two 3D infrared circuit boards 24 and 25 and the human sensor 27 in addition to the LED/remote control circuit board 23. Moreover, it is possible to dispose the mounted circuit boards and modules at preferable mounting positions from the perspective of a viewing angle or the like. Thus, it becomes easy to improve the performance of the television 1.

Moreover, in the present embodiment, the camera 35 is mounted with the photographing direction D tilted upward. Thus, even when a user stands at some distance from the television 1, it is possible to photograph the face of the user with a camera. Therefore, it is possible to provide users with more functions through a user authentication function and other functions, for example.

In the present embodiment, the television 1 includes the circuit board 36 to which the camera 35 is attached, the first hook 51 protruding from the inner surface S1 of the housing 4 so as to support the first end portion 45 of the circuit board 36, and the second hook 52 protruding from the inner surface S1 of the housing 4 so as to support the second end portion 46 of the circuit board 36. According to such a configuration, it is possible to support the camera 35 tilted obliquely with a relatively simple configuration.

In the present embodiment, the first hook 51 includes the first contact portion 51b configured to contact with the first end portion 45 of the circuit board 36 from a side of the housing 4 opposite to the inner surface S1. The second hook 52 includes the second contact portion 52b configured to contact with the second end portion 46 of the circuit board 36 from the side of the housing 4 opposite to the inner surface S1.

Here, for comparison, a mounting structure in which a camera is not tilted with respect to the front wall 6 will be considered. In this case, when the camera 35 is disposed close to the inner surface S1 of the housing 4, the lengths (i.e., stroke) of the first and second hooks 51 and 52 decrease accordingly. Moreover, the "lengths of hooks" refer to the distances between the inner surface S1 of the housing 4 and the contact portions 51b and 52b. When the lengths of the hooks 51 and 52 decrease, the hooks 51 and 52 become rigid (i.e., are not likely to be elastically deformed) and will not expand outward easily. Thus, it is difficult to attach the camera 35 to the inner side of the hooks 51 and 52.

In contrast, in the present embodiment, the length of the first hook 51 is secured to be larger than the length of the second hook 52 by using the posture of the camera 35 mounted in a tilted posture. That is, the distance L1 between the first contact portion 51b and the inner surface S1 of the housing 4 is larger than the distance L2 between the second contact portion 52b and the inner surface S1 of the housing 4. According to this configuration, the first hook 51 can be elastically deformed easily, and even when the camera 35 is disposed close to the inner surface S1 of the housing 4, it is possible to improve the attachment properties of the camera 35.

Moreover, for comparison, a structure in which a camera 101 is mounted along the inner surface S1 of the housing 4 will be considered with reference to FIG. 7. In this case, as shown in FIG. 7, a front bezel 102 constituting the front wall 6 has some thickness t since it is generally a molded product. Thus, the camera 101 is positioned to be recessed toward the inner side of the housing 4 in relation to the outside by at least the thickness t of the front wall 6.

Here, since a viewing angle A of the camera 101 widens in a radial fashion, a window portion 103 of the front wall 6 needs to have a relatively large width W2 (e.g., a diameter) in order to secure the viewing angle A of the camera 101. When the window portion 103 of the large width W2 is formed in the front wall 6, the window portion 103 stands out from the front wall 6, which may deteriorate the design properties of the television.

In contrast, in the present embodiment, as shown in FIG. 6, at least a part of the camera 35 is inserted into the opening 61 of the housing 4 and positioned closer to the outside (e.g., the front side) more than the inner surface S1 of the housing 4 is. Thus, the width W1 (e.g., a diameter) of the light transmitting portion 65 (the window portion) for securing the viewing angle A of the camera 35 can be decreased as compared to the structure of FIG. 7. Therefore, the light transmitting portion 65 is less likely to stand out from the front wall 6, and the design properties of the television 1 can be improved.

Moreover, when at least a part of the camera 35 is inserted into the opening 61 of the housing 4 and positioned closer to the outside (e.g., the front side) than the inner surface S1 of the housing 4, it is easy to secure a space behind the camera 35, and a high-density mounting structure can be realized in the television 1.

In the present embodiment, the television 1 further includes the sheet 62 that covers the opening 61. With this configuration, the camera 35 inserted into the opening 61 of the housing 4 is covered by the sheet 62 and is less likely to stand out from the outside. This contributes to improvement in the design properties of the television 1. Moreover, when the sheet 62 is thinner than the front wall 6, the camera 35 can be disposed closer to the outer side of the housing 4 accordingly. Thus, it is possible to secure the viewing angle A of the camera 35 even when the light transmitting portion 65 has a small area.

In the present embodiment, the sheet 62 includes a light transmitting portion at a position corresponding to the camera 35 and a light blocking portion at a position which does not correspond to the camera 35.
With this configuration, it is possible to conceal the portion which does not correspond to the camera 35 from the outside and to improve the design properties of the television 1.

In the present embodiment, the sheet 62 is transparent and includes the light blocking print 72 outside the position corresponding to the camera 35. According to this configuration, it is possible to obtain the sheet 62 having the light transmitting portion 65 and the light blocking portion 66 with a relatively simple configuration.

For example, the mounting structure of the camera 35 is not limited to one which uses the ribs 41 and 42 and the hooks 51 and 52, and other mounting structures may be used. Moreover, the sheet 62 may not be provided.

Next, several embodiments of an electronic apparatus will be described.

A television according to an embodiment comprises: a housing; a display device in the housing; and a camera at a position shifted in a longitudinal direction of an end portion of the housing in relation to the center of the end portion.

A television according to an embodiment comprises:
a housing; a display device in the housing; and a camera in an end portion of the housing, wherein a photographing direction of the camera is tilted toward the center of the housing.

An electronic apparatus according to an embodiment comprises: a housing comprising an opening; and a camera inserted into the opening and comprising a portion closer to the outside of the housing than an inner surface of the housing is. An example of this electronic apparatus is a television.

Next, several embodiments of a television will be described.

[1] A television comprising: (i) a housing; (ii) a display device in the housing; and (iii) a circuit board in a lower end portion of the housing; and (iv) a camera at a position shifted substantially in a horizontal direction in relation to the center of the lower end portion of the housing, wherein a photographing direction of the camera is tilted upward.

[2] The television of [1], wherein the circuit board is closer to the center of the lower end portion of the housing than the camera is.

[3] The television of [1] or [2], further comprising: a camera circuit board to which the camera is attached; a first engaging portion protruding from an inner surface of the housing and configured to support an upper end portion of the camera circuit board; and a second engaging portion protruding from the inner surface of the housing and configured to support a lower end portion of the camera circuit board.

[4] The television of [3], wherein the first engaging portion comprises a first contact portion configured to contact with the upper end portion of the camera circuit board from a side of the housing opposite to the inner surface, the second engaging portion comprises a second contact portion configured to contact with the lower end portion of the camera circuit board from the side of the housing opposite to the inner surface, the first engaging portion and the second engaging portion are configured to be elastically deformed, and a distance between the first contact portion and the inner surface of the housing is larger than a distance between the second contact portion and the inner surface of the housing.

[5] The television of [1] or [4], wherein the housing comprises an opening, and at least a part of the camera is inserted into the opening and closer to the outside of the housing than the inner surface of the housing is.

[6] The television of [5], further comprising a sheet that is thinner than a thickness of the housing and covers the opening.

[7] The television of [6], wherein the sheet includes a light transmitting portion at a position corresponding to the camera and a light blocking portion at a position away from the camera.

[8] The television of [6] or [7], wherein the sheet comprises a light blocking print outside a region corresponding to the camera.

[9] A television comprising: (i) a housing; (ii) a display device in the housing; and (iii) a camera at a position shifted in a longitudinal direction of an end portion of the housing in relation to the center of the end portion.

[10] A television comprising: (i) a housing; (ii) a display device in the housing; and (iii) a camera in an end portion of the housing with a photographing direction thereof tilted toward the center of the housing (e.g., tilted upward).

## Claims

1. A television comprising:
a housing (4) comprising a front wall (6) having an inner surface and an outer surface, and an end portion (11), the front wall (6) extending approximately vertically and comprising a first opening (6a) and a second opening (61), the end portion (11) forming a part of the front wall (6);
a display device (8) in the housing (4), the display device comprising a display screen (8a) exposed through the first opening (6a); and
a camera (35) in the end portion (11) of the housing (4), wherein a photographing direction of the camera (35) is tilted with respect to the display screen (8a), and
at least a part of the camera (35) is inserted in the second opening (61) such that the camera (35) comprises a portion located closer to the outside of the housing (4) than the inner surface of the front wall (6).

2. The television of Claim 1,
further comprising a sheet (62) covering the second opening (61);
wherein the front wall (6) comprising a thickness (t), and
the sheet (62) is thinner than the thickness (t) of the front wall (6).

3. The television of Claim 2,
wherein the sheet (62) comprises a light transmitting portion (65) at a position corresponding to the camera (35) and a light blocking portion (66) at a position away from the camera (35).

4. The television of Claim 3,
wherein the sheet (62) comprises a light blocking print (72) outside a light transmitting portion (65).

5. The television of Claim 2,
wherein the outer surface of the front wall (6) comprises a recess which has a deep corresponding to a thickness of the sheet (62), and
the sheet (62) is attached to the recess, and a surface of the sheet (62) is located on substantially the same plane as the outer surface of the front wall (6).

6. The television of Claim 2,
wherein the opening (61) is tilted with respect to the front wall (6), and
the sheet (62) is parallel to the front wall (6).

7. The television of Claim 2,
wherein the sheet (62) comprises a light transmitting portion (65) which is smaller than an outline of the opening (61).

8. The television of one of Claims 1 to 7, further comprising:
a camera circuit board (36) attached to the camera (35), the camera circuit board (36) comprising a first end portion (45) and a second end portion (46), the second end portion (46) being opposite the first end portion (45);
a first engaging portion (51) protruding from an inner surface (51) of the housing (4) and configured to support the first end portion (45) of the camera circuit board (36); and
a second engaging portion (52) protruding from the inner surface (S1) of the housing (4) and configured to support the second end portion (46) of the camera circuit board (36).

9. The television of Claim 8,
wherein the first engaging portion (51) comprises a first contact portion (51b) configured to contact with the first end portion (45) of the camera circuit board (36) from a side opposite to the inner surface (S1) of the housing (4),
the second engaging portion (52) comprises a second contact portion (52b) configured to contact with the second end portion (46) of the camera circuit board (36) from the side opposite to the inner surface (S1) of the housing (4),
the first engaging portion (51) and the second engaging portion (52) are configured to be elastically deformed, and
a distance (L1) between the first contact portion (51b) and the inner surface (S1) of the housing (4) is larger than a distance (L2) between the second contact portion (52b) and the inner surface (S1) of the housing (4).

10. The television of one of Claims 1 to 9,
wherein the camera (35) is at a position shifted in a longitudinal direction of the end portion (11) of the housing (4) in relation to the center of the end portion (11).

11. The television of Claim 10,
further comprising a circuit board (24) in the end portion (11) of the housing (4), wherein the circuit board (24) is closer to the center of the end portion (11) of the housing (4) than the camera (35).
